# EUROPEAN PATENT SPECIFICATION

(11) **EP 4 223 142 B1**
(45) Date of publication and mention of the grant of the patent: **07.10.2026**
(21) Application number: 21876025.4
(22) Date of filing: 29.09.2021
(51) Int. Cl.: A23L 5/10, A23P 20/20, B65G 37/00, B05B 1/14, B05B 13/02, A21B 1/36, A21B 1/42, F24C 15/00, B05B 1/20

(54) **STEAMING APPARATUS**
DÄMPFVORRICHTUNG
APPAREIL DE VAPORISATION

(30) Priority: 29.09.2020 KR 20200127549
(43) Date of publication of application: 09.08.2023
(73) Proprietor: CJ Cheiljedang Corporation, Seoul 04560 (KR)
(72) Inventor: LEE, Jong Jun, Seoul 04560 (KR); KIM, Jong Gil, Seoul 04560 (KR)
(74) Representative: Potter Clarkson
(86) International application number: PCT/KR2021/013335
(87) International publication number: WO 2022/071750

(56) References cited:
- DE-C- 566 984
- GB-A- 646 550
- JP-A- 2002 034 482
- JP-A- 2007 029 509
- JP-A- 2016 127 904
- KR-A- 20100 045 786
- KR-A- 20200 016 645
- US-A- 2 767 667
- US-A- 6 095 805
- US-A1- 2018 213 963
- US-B1- 8 646 383

## Description

### TECHNICAL FIELD

The present disclosure relates to a steaming apparatus in which, by spraying steam from a lateral portion of a transfer apparatus that transfers an object to be cooked, a steam input amount may be reduced, and facility operation and maintenance costs may be saved.

### BACKGROUND ART

A steaming apparatus is used to cook/sterilize an object to be cooked, for example, dumplings and the like, by applying high-temperature and high-pressure steam thereto. An object to be cooked may be cooked/sterilized in a steaming apparatus and then made into a product.

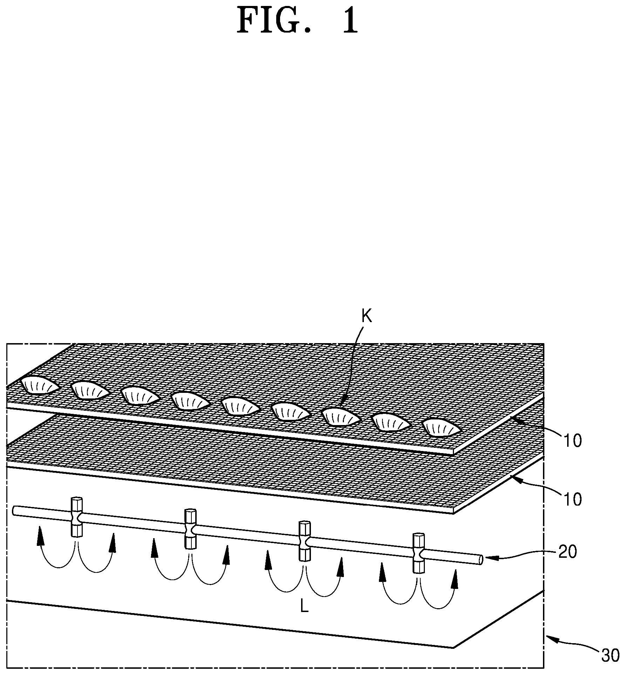

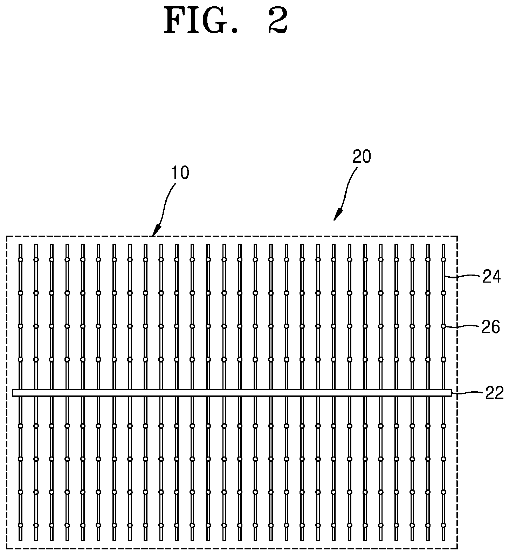

FIG. 1 is a view showing the structure of a steaming apparatus according to the related art, and FIG. 2 is a view showing the structure of a spray device 20 of a steaming apparatus according to the related art.

The steaming apparatus according to the related art includes a transfer apparatus 10 for transferring an object K to be cooked, the spray device 20 for providing steam to the object K to be cooked, and a main body frame 30.

The transfer apparatus 10 is provided in the form of a net.

The spray device 20 includes pipes and nozzles 26. The pipes of the spray device 20 include a center pipe 22 parallel to the traveling direction of the transfer apparatus 10, and a branch pipe 24 extending in a lateral direction from the center pipe 22 and intersecting the traveling direction of the transfer apparatus 10. The nozzles 26 are provided in the branch pipe 24.

The main body frame 30 is provided as a containment vessel capable of withstanding high-temperature and high-pressure steam.

As illustrated in FIG. 1, in the steaming apparatus according to the related art, the spray device 20 is disposed under the transfer apparatus (net) 10. The spray device 20, as illustrated in FIG. 2, includes branch type pipes, and the pipes and the nozzles 26 are regularly distributed throughout the entire area under the transfer apparatus 10.

Accordingly, in the steaming apparatus according to the related art, steam is sprayed in a direction toward the ground as indicated by an arrow L. The sprayed steam collides against the bottom portion of the main body frame 30 and then ascends to be brought into contact with the object K to be cooked located above the transfer apparatus 10.

Accordingly, in the steaming apparatus according to the related art, unnecessary facility heat dissipation loss occurs. In addition, as a distance between the nozzles 26 and the object K to be cooked is relatively great, steam is sprayed toward the floor and wall surfaces so that heat loss is generated.

In other words, in the steaming apparatus according to the related art, only a portion of steam is transferred to the object K to be cooked, and the other portion is lost in the form of facility/conveyor heat dissipation loss or exhaustion loss. Thus, there are problems that a necessary steam input amount increases and facility operating expenses increase.

Furthermore, in the steaming apparatus according to the related art, as steam supply pipes are distributed under the transfer apparatus 10, when organic materials (oil, solids, etc.) and the like fall from the object K to be cooked, the materials may be firmly adhere to the pipes and nozzles under the net. In this state, the organic materials may be carbonized by high temperature (99°C or more) and may remain. Accordingly, there are problems that the nozzles 26 are clogged, or products are contaminated with carbide.

Accordingly, to prevent clogging of nozzles and maintain the quality of products, it is necessary to periodically clean and manage the organic materials. In this state, the existing steaming apparatus has many places to be cleaned because the pipes are distributed in a range corresponding to the entire area of the net. Furthermore, to access the pipes, the net of the steaming apparatus is entirely disassembled and reassembled after cleaning, it takes a considerable amount of manpower and time.

Accordingly, there is a demand for the development of a steaming apparatus capable of reducing a steam input amount and saving operation and management costs.

US 8,646,383 B1 discloses a spiral oven and a method of cooking a food product in a spiral oven using a cooking medium wherein (a) the food product is conveyed within the oven cooking chamber by a spiral conveyor having a plurality of spiral flights and (b) the cooking medium is discharged either upwardly and/or downwardly within, or laterally into, one or more vertical gaps between adjacent pairs of spiral flights using one or more delivery duct structures which extend inside the interior of the cooking chamber.

GB 646550 A discloses an oven wherein the radiator conduits (or certain of them) are provided with a series of nozzles or vents for admitting gases from the conduits into the oven chamber and wherein means are provided for diverting some or all of the radiator conduit gases from their normal closed path of circulation to cause such to enter the oven through the nozzles or vents and for drawing exhausting oven atmosphere gases from the oven chamber back into the circulating system to accord with the gases entering through the nozzles or vents.

Additional relevant state of the art is found in US 2 767 667 A.

### DESCRIPTION OF EMBODIMENTS

### TECHNICAL PROBLEM

It is an objective of the present disclosure to provide a steaming apparatus in which, by spraying steam from a lateral portion of a transfer apparatus that transfers an object to be cooked, a steam input amount may be reduced and facility operation and maintenance costs may be saved.

### SOLUTION TO PROBLEM

According to an aspect of the disclosure, a steaming apparatus includes the features of claim 1.

The transfer apparatus includes a plurality of transfer lines, and the plurality of transfer lines is arranged in a multilayer with a predetermined interval in a vertical direction.

According to an embodiment, the plurality of transfer lines may be provided in the form of a net.

The pipe portion is arranged between the plurality of transfer lines in the vertical direction.

The nozzle portion includes a first nozzle portion, a second nozzle portion, and a third nozzle portion, the first nozzle portion includes a spray hole penetrating the first nozzle portion in a first direction, the second nozzle portion includes a spray hole penetrating the second nozzle portion in a second direction, the third nozzle portion includes a spray hole penetrating the third nozzle portion in a third direction, the first direction has a first contained angle downward from the horizontal plane, the second direction has a second contained angle downward from the horizontal plane, the third direction has a third contained angle downward from the horizontal plane, and the first contained angle, the second contained angle, and the third contained angle have different sizes from one another.

According to an unclaimed example, the nozzle portion includes a plurality of nozzle portions, each of the plurality of nozzle portions may include a spray hole, at least one of the plurality of nozzle portions may include a spray hole penetrating the at least one nozzle portion in the first direction, at least one of the plurality of nozzle portions may include a spray hole penetrating the at least one nozzle portion in the second direction, the first direction and the horizontal plane may have the first contained angle, the second direction and the horizontal plane may have the second contained angle, and the size of the first contained angle may be different from the size of the second contained angle.

According to the invention, the nozzle portion may include a first nozzle portion, a second nozzle portion, and a third nozzle portion, the first nozzle portion may spray steam in a first direction, the second nozzle portion may spray steam in a second direction, the third nozzle portion may spray steam in a third direction, the first direction and the horizontal plane has a first contained angle, the second direction and the horizontal plane has a second contained angle, the third direction and the horizontal plane has a third contained angle, and the first contained angle, the second contained angle, and the third contained angle has different sizes from one another.

According to an embodiment, the sizes of the first contained angle, second contained angle, and third contained angle may be 0° to 90°.

According to an embodiment, in the nozzle portion, a plurality of nozzle arrays, in each of which the first nozzle portion, the second nozzle portion, and the third nozzle portion are sequentially arranged, may be provided along the pipe portion.

### ADVANTAGEOUS EFFECTS OF DISCLOSURE

The steaming apparatus according to an embodiment of the present disclosure, compared with the steaming apparatus according to the related art, has the effects, such as a reduced use amount of steam, a reduced management point according to the number of nozzles, unnecessity for disassembly during cleaning, reduced cleaning time and manpower, and prevention of contamination of a spray device due to falling organic materials.

### BRIEF DESCRIPTION OF DRAWINGS

FIG. 1 is a view showing the structure of a steaming apparatus according to the related art.
FIG. 2 is a view showing the structure of a spray device of a steaming apparatus according to the related art.
FIG. 3 is a view showing the structure of a steaming apparatus according to an embodiment of the present disclosure.
FIG. 4 is a view showing the appearance of a main body frame of a steaming apparatus according to an embodiment of the present disclosure.
FIG. 5 is a view showing the structure of a spray device of a steaming apparatus according to an embodiment of the present disclosure.
FIG. 6 is a view showing, in detail, the structure of a spray device of a steaming apparatus according to an embodiment of the present disclosure, by enlarging a region A of FIG. 3.
FIG. 7 illustrates a pipe portion viewed from a direction in which a nozzle portion is formed, and FIG. 8 shows the formation locations of each nozzle portion when viewed from a direction X-X of FIG. 7.
FIG. 9 illustrates the structure of a spray device according to an embodiment of the present disclosure.

### BEST MODE

A steaming apparatus according to an embodiment of the disclosure comprises: a main body frame; a transfer apparatus passing through the main body frame and moving an object to be cooked in a direction; a spray device arranged in both lateral portions of the transfer apparatus, wherein the spray device comprises: a pipe portion extending in a direction parallel to a transport direction of the object to be cooked; and a nozzle portion connected to the pipe portion, and receiving and spraying stream to the outside, wherein the nozzle portion sprays steam in a direction toward the inside of the transfer apparatus from the outside of the transfer apparatus.

### MODE OF DISCLOSURE

Hereinafter, an embodiment according to the present disclosure is described with reference to the accompanying drawings.

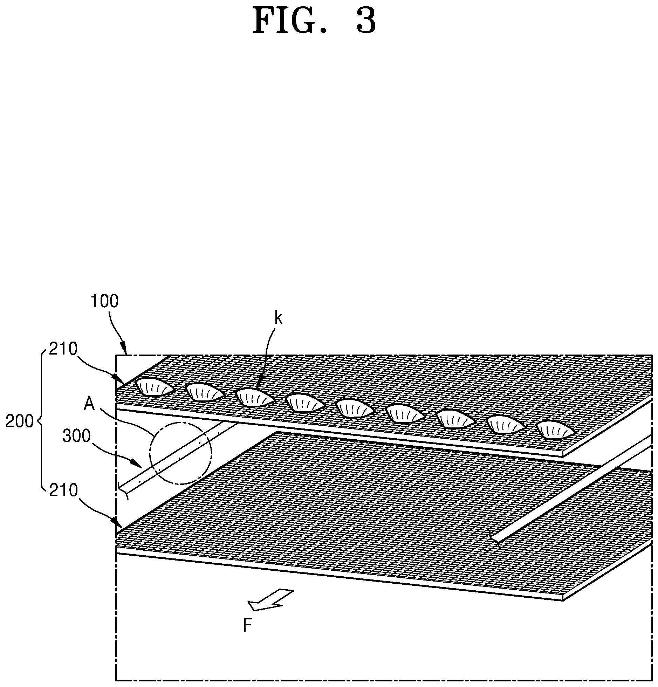

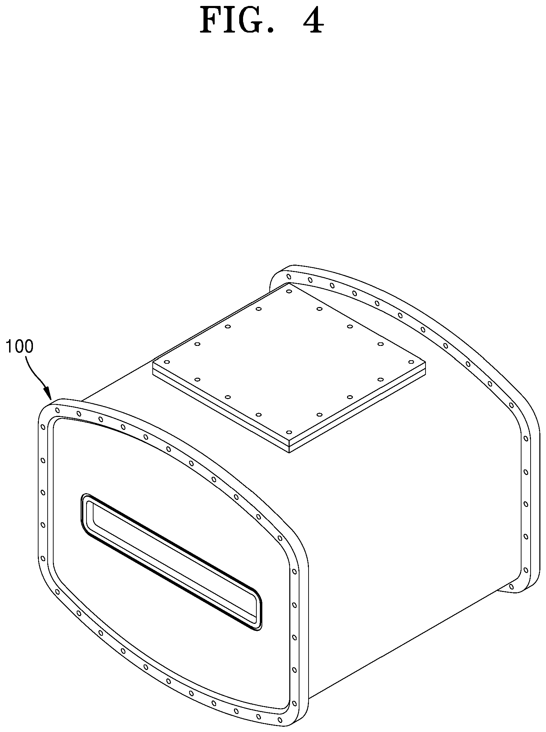

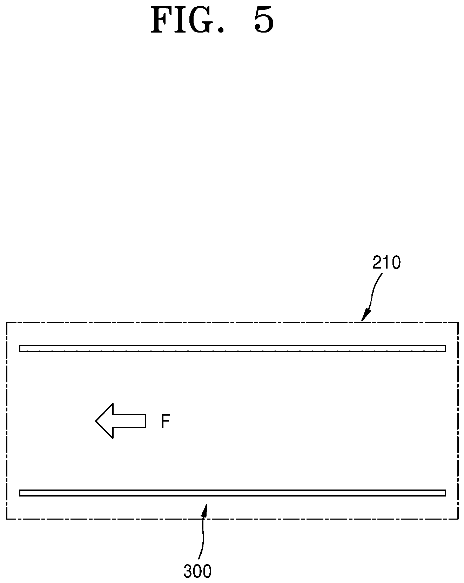

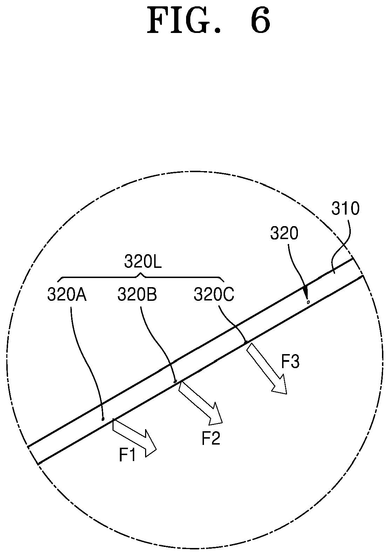

FIG. 3 is a view showing the structure of a steaming apparatus according to an embodiment of the present disclosure. FIG. 4 is a view showing an example of the appearance of a main body frame 100 of a steaming apparatus according to an embodiment of the present disclosure. FIG. 5 is a view showing the structure of a spray device 300 of a steaming apparatus according to an embodiment of the present disclosure. FIG. 6 is a view showing in detail the spray device 300 of a steaming apparatus according to an embodiment of the present disclosure, by enlarging a region A of FIG. 3.

The steaming apparatus according to an embodiment of the present disclosure includes: the main body frame 100; a transfer apparatus 200 passing through the main body frame 100 and moving an object to be cooked; and a spray device 300 arranged inside the main body frame 100 in a lateral portion of the transfer apparatus 200.

The main body frame 100 has a container shape having an inner space. The inner space of the main body frame 100 may function as a steaming space filled with high-temperature and high-pressure steam. The main body frame 100 may include a material having rigidity. Accordingly, the high-temperature and high-pressure steam may fill the inside of the main body frame 100. An inlet and an outlet through which the transfer apparatus 200 described below passes may be provided in both end portions of the main body frame 100. In the drawings, a specific shape of the main body frame 100 is omitted, and the main body frame 100 may have any configuration in which the transfer apparatus 200 is movable and high-temperature and high-pressure steam is fillable. FIG. 4 illustrates an example of the appearance of the main body frame 100. However, the appearance and configuration of the main body frame 100 are not limited to those of FIG. 4. Furthermore, although the internal structure of the main body frame 100 is not illustrated, the internal structure of the main body frame 100 would be obviously understood by a person skilled in the art.

The transfer apparatus 200 is arranged in the main body frame 100. The transfer apparatus 200 passes through the main body frame 100.

The transfer apparatus 200 is capable of moving an object to be cooked placed on the transfer apparatus 200. According to an embodiment, the transfer apparatus 200 may be an apparatus in the form of a conveyor belt traveling in a direction. The traveling direction of the transfer apparatus 200 is as indicated by an arrow F of FIGS. 3 and 5.

According to the invention the transfer apparatus 200 includes multiple transfer lines.

The transfer line may include a belt line on which an object to be cooked is placed.

According to an embodiment, the transfer line may be a net. In other words, an object to be cooked may be placed on a net. Accordingly, not only an upper surface of an object to be cooked, but also a lower surface of the object to be cooked may be in contact with steam. Accordingly, more effective steaming may be performed. In addition, a contact area between the object to be cooked and the transfer line may be reduced. Accordingly, the object to be cooked may be prevented from adhering to the transfer line.

The plurality of transfer lines are arranged in a multilayer with a predetermined interval in a vertical direction. The object to be cooked may be placed on each transfer line. Accordingly, a plurality of objects to be cooked may be simultaneously moved while steaming is performed.

The spray device 300 includes: a pipe portion 310 extending in the same direction as a transport direction of the object to be cooked; and a nozzle portion 320 connected to the pipe portion 310 and receiving and spraying steam to the outside.

The pipe portion 310 includes a pipe. The pipe portion 310 may be connected to an external steam generator to receive steam, and may transfer the received steam.

According to an embodiment, as illustrated in FIG. 3, the pipe portion 310 is arranged in the lateral portion of the transfer apparatus 200. The lateral portion means an edge in either of both lateral directions. In other words, the pipe portion 310 may be arranged in an end portion of each of both lateral directions of the transfer apparatus 200, and the pipe portion 310 may extend in the same direction as the transport direction of the object to be cooked carried by the transfer apparatus 200. In other words, the pipe portion 310 may extend parallel to the extension direction (traveling direction) of the transfer apparatus 200 the pipe portion 310.

Here, in FIG. 3, the pipe portion 310 is illustrated as being located inside the edge of each of both lateral directions of the transfer apparatus 200. However, the present disclosure is not limited thereto. In other words, the pipe portion 310 may be located outside the edge of each of both lateral directions of the transfer apparatus 200, or the pipe portion 310 may be located to overlap the edge of each of both lateral directions of the transfer apparatus 200.

In addition, as described above, as a plurality of transfer lines is provided, the pipe portion 310 is located between the transfer lines in a vertical direction.

The nozzle portion 320 is a nozzle device connected to the pipe portion 310. The nozzle portion 320 may include a plurality of nozzle portions. In other words, a plurality of nozzle portions 320 may be connected to one pipe portion 310.

As illustrated in FIG. 6 to 8, according to an embodiment of the present disclosure, the nozzle portion 320 may be configured as a through-hole formed in the pipe portion 310. In other words, according to an embodiment, the nozzle portion 320 may be configured as a spray hole in the form of a through-hole penetrating a side surface of the pipe portion 310 and having a penetration direction (direction angle) in a specific direction.

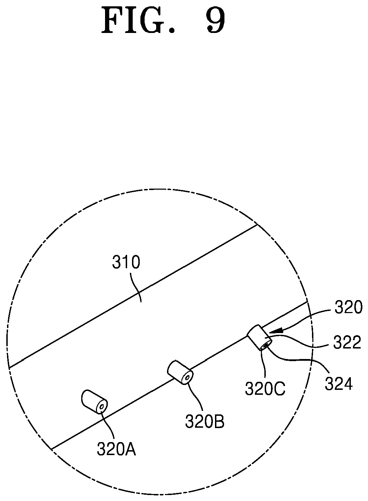

Meanwhile, as illustrated in FIG. 9, according to an embodiment of the present disclosure, each nozzle portion 320 may be configured to include a nozzle body 322 protruding from the pipe portion 310 and a spray hole 324 formed in the nozzle body 322. In other words, the configuration of the nozzle portion 320 is not limited thereto, and any device capable of spraying stream delivered from the pipe portion 310 may have a certain configuration.

The nozzle portion 320 is open in a direction toward the inside of the transfer apparatus 200. Accordingly, the nozzle portion 320 may spray steam in a direction toward the inside of the transfer apparatus 200, from the outside of the transfer apparatus 200.

When the steaming apparatus according to the related art, in which the spray device 300 is disposed under the transfer apparatus 200 to provide steam in an upward direction, is compared with the steaming apparatus according to an embodiment of the present disclosure, the steaming apparatus according to an embodiment of the present disclosure has the following effect.

As described above, in an embodiment of the disclosure, the pipe portion 310 and the nozzle portion 320 constituting the spray device 300 are arranged in both lateral portion of the transfer apparatus 200. Accordingly, steam is supplied by a side spraying method in which steam is sprayed from the left and right sides of the transfer apparatus 200 in a direction toward a central portion thereof.

Accordingly, in the steaming apparatus according to an embodiment of the present disclosure, humidity and temperature of the inner space of the main body frame 100 may be quickly increased by steam, and unnecessary facility heat dissipation loss may be reduced. Furthermore, in the steaming apparatus according to an embodiment of the present disclosure, as a steam input amount may be reduced, steam efficiency may be improved compared with the steaming apparatus according to the related art.

Furthermore, in the steaming apparatus according to an embodiment of the present disclosure, compared with the steaming apparatus according to the related art, as the facility heat dissipation loss is reduced and the steam input amount is reduced, the number of pipes and nozzles needed to supply steam to the same amount of objects to be steamed may be decreased.

In addition, in the steaming apparatus according to an embodiment of the present disclosure, the spray device 300 is arranged in both lateral portions of the transfer apparatus 200. Accordingly, even when various by-products (e.g., various organic materials and the like caused from dumpling skin/fillings and the like) generated from an object to be cooked fall, the by-products do not affect the spray device 300.

Accordingly, the facility operation and maintenance costs of the steaming apparatus may be saved.

According to an embodiment, the nozzle portion 320 includes a plurality of nozzle portions. In other words, one pipe portion 310 includes a plurality of nozzle portions 320. In this state, the plurality of nozzle portions 320 may be spaced apart from each other with a distance therebetween. For example, the distance between the nozzle portions 320 may be 8.5 cm.

In this state, at least one of the plurality of nozzle portions 320 sprays steam in a first direction, and at least one of the plurality of nozzle portions 320 sprays steam in a second direction. In this state, the first direction and the horizontal plane have a first contained angle, the second direction and the horizontal plane have a second contained angle, and the size of the first contained angle is different from the size of the second contained angle. The horizontal plane may mean the ground plane or an upper surface of the transfer apparatus 200.

In other words, it may be described that the nozzle portion 320 includes at least one first nozzle portion 320A and at least one second nozzle portion 320B, and an open direction of the first nozzle portion 320A may be different from an open direction of the second nozzle portion 320B.

Here, the open direction means a penetration direction of a through-hole constituting the nozzle portion 320. As the first nozzle portion 320A and the second nozzle portion 320B have different open directions, a spraying direction of steam sprayed from the first nozzle portion 320A may be different from a spraying direction of steam sprayed from the second nozzle portion 320B. In other words, the nozzle portion 320 may include the nozzle portions 320 having different spraying directions in which the steam is sprayed.

In other words, the first nozzle portion 320A and the second nozzle portion 320B may have substantially the same configuration, and may be conceptually distinguished in terms of different open directions. In other words, the difference between the first nozzle portion 320A and the second nozzle portion 320B lies in the penetration direction of the through-hole, and the steam spraying direction thereby.

Here, the nozzle portion 320 spraying steam in a direction is not limited to the spraying of steam in a specific direction and within a specific space range. Fundamentally, the steam sprayed from the nozzle portion 320 diffuses.

As in the embodiment described above, as the nozzle portions 320 having different spraying directions are provided, three-dimensional supply of steam may be possible, and the object to be cooked may be uniformly steamed. Accordingly, steam efficiency may be improved.

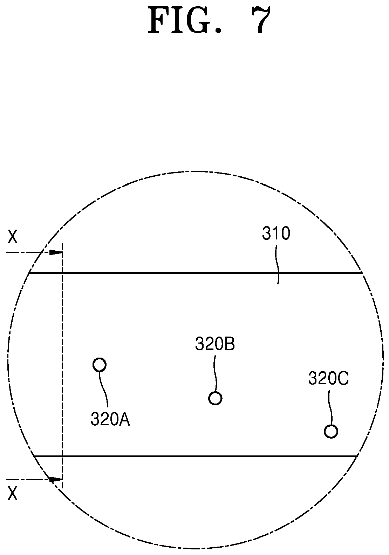

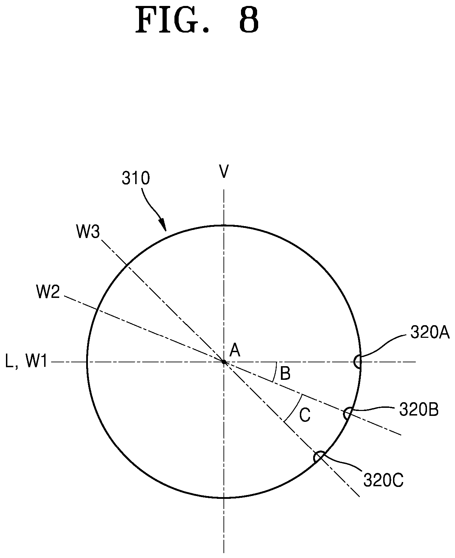

According to a more detailed embodiment, as illustrated in FIG. 6 to 8, the nozzle portion 320 includes the first nozzle portion 320A, the second nozzle portion 320B, and a third nozzle portion 320C. FIG. 6 is an enlarged view of the region A of FIG. 3, FIG. 7 illustrates the pipe portion 310 viewed from a direction in which the nozzle portion 320, and FIG. 8 illustrates the respective formation positions of the nozzle portion 320 viewed from a direction X-X of FIG. 7.

In this state, the first nozzle portion 320A sprays steam in a first direction W1 as indicated by an arrow F1. In addition, the second nozzle portion 320B sprays steam in a second direction W2 as indicated by an arrow F2. In addition, the third nozzle portion 320C sprays steam in a third direction W3 as indicated by an arrow F3.

Here, the spraying of steam in a specific direction means that, as described above, the spray hole 324 provided in the nozzle portion heads a specific direction, and the spraying of steam is guided in the corresponding direction.

As illustrated in FIG. 8 the first direction W1 and a horizontal plane L has a first contained angle A, the second direction W2 and the horizontal plane L has a second contained angle B, and the third direction W3 and the horizontal plane L has a third contained angle C. The first contained angle A, the second contained angle B, and the third contained angle C have different sizes.

Accordingly, the nozzle portion 320 performs spraying in at least three directions.

Accordingly, three-dimensional supply of steam may be possible, and the object to be cooked may be uniformly steamed. Accordingly, steam efficiency may be improved. In particular, when there are three steam spraying directions as in the embodiment, the deviation in temperature in the left, middle, and right sides of the transfer apparatus 200 may be reduced.

According to an embodiment, in detail, the first contained angle A, the second contained angle B, and the third contained angle C may respectively have sizes of 0 to 90°.

According to an embodiment, the first contained angle A, the second contained angle B, and the third contained angle C may be 0°, 22.5°, and 45°, respectively.

Here, each contained angle is downward from the horizontal plane L, as illustrated in FIG. 8.

Accordingly, the first nozzle portion 320A may supply steam to an object to be cooked located at a relatively far position from the pipe portion 310 (that is, an object to be cooked located in the middle portion of the transfer line). The third nozzle portion 320C may supply steam to an object to be cooked located at a relatively near position from the pipe portion 310 (that is, an object to be cooked located outside the transfer line). Accordingly, a uniform steam effect may be provided to a plurality of objects to be cooked on the transfer line.

Furthermore, according to an embodiment, the nozzle portion 320 includes a nozzle array 320L in which the first nozzle portion 320A, the second nozzle portion 320B, and the third nozzle portion 320C are sequentially arranged, and a plurality of nozzle arrays 320L may be provided along the pipe portion 310.

Accordingly, the steam may be supplied uniformly and three-dimensionally, and the steam effect may be further improved.

The comparison and contrast between the steaming apparatus according to an embodiment of the present disclosure and the steaming apparatus according to the related art are described below.

In the steaming apparatus according to the related art, the steam supply pipes (the spray device 20) are distributed under the net (the transfer apparatus 10). Accordingly, in the steaming apparatus according to the related art, steam is sprayed in the ground direction, and the sprayed steam collides against a lower portion of the net and tens ascends and contacts the object to be cooked placed on an upper portion of the net. In addition, as the distance between the nozzle and the object to be cooked is relatively great, the steam is sprayed toward the floor and wall surfaces so that heat loss is generated. Accordingly, unnecessary facility heat dissipation loss occurs and the steam input amount is increased.

In contrast, in the steaming apparatus according to an embodiment of the present disclosure, the pipe portion 310 of the spray device 300 is installed in both sides of the transfer apparatus 200, and the pipe portion 310 extends in a direction parallel to the traveling direction of the transfer apparatus 200. Accordingly, in the steaming apparatus according to the present disclosure, steam is sprayed from both sides of the transfer apparatus 200, and thus, the sprayed steam may directly contact the object to be cooked at a relatively close distance. Accordingly, the facility heat dissipation loss may be reduced and the steam input amount may be reduced.

Furthermore, in the steaming apparatus according to an embodiment of the present disclosure, the steam spraying angle of the nozzle portion 320 is a contained angle (0°, 22.5°, and 45° in an embodiment) from the horizontal plane, and as the nozzle portions 320 have a distance (8.5 cm in an embodiment) from each other, the deviation of the steam sprayed toward the left, right, and middle sides of the transfer apparatus 200 may be reduced.

Accordingly, the basic unit of steam may be reduced by about 15-20% compared to the existing usage. Here, the basic unit of steam means an amount of steam in kilograms per one ton of an object to be steamed.

In other words, while the basic unit of steam of the steaming apparatus according to the related art is 837.11 kg/ton, the basic unit of steam of the steaming apparatus according to an embodiment of the present disclosure may be about 697.74 kg/ton. In other words, according to the steaming apparatus according to an embodiment of the present disclosure, the amount of steam may be reduced. Accordingly, it may be checked that the usage amount of steam needed to maintain the same set temperature is reduced by about 16% in the steaming apparatus including the spray device 300 according to the present disclosure, compared with the steaming apparatus using the spray device 20 having the existing pipe structure.

Furthermore, in the steaming apparatus according to an embodiment of the present disclosure, as the number of the nozzle portions 320 decreases, ease of operation and management of the steaming apparatus may be drastically improved.

In the steaming apparatus according to the related art, as the steam supply pipes are distributed under the net (the transfer apparatus 10), when organic materials and the like generated from an object to be cooked fall, the organic materials may firmly adhere to the pipes and nozzles under the net. In this state, the organic materials may be carbonized by high temperature (99°C or more) and may remain. Accordingly, to prevent clogging of the nozzles and maintain the quality of products, it is necessary to periodically clean and manage the organic materials. In this state, the existing steaming apparatus has many places to be cleaned as illustrated in FIG. 2 because the pipes are distributed in a range corresponding to the entire area of the net. Furthermore, to access the pipes, the net of the steaming apparatus is entirely disassembled and reassembled after cleaning, it takes a considerable amount of manpower and time.

In contrast, in the steaming apparatus according to an embodiment of the present disclosure, the pipe portion 310 and the nozzle portion 320 are located in the left and right sides of the transfer apparatus 200, not thereunder. Accordingly, there may be no organic material accumulated on the pipe portion 310 and the nozzle portion 320, or the amount of organic materials accumulated on the pipe portion 310 and the nozzle portion 320 may be greatly reduced. In addition, in the steaming apparatus according to an embodiment of the present disclosure, during cleaning, without disassembling the transfer apparatus 200, only the pipe portion 310 and the nozzle portion 320 in the left and right sides of the transfer apparatus 200 are cleaned so that manpower and time needed for cleaning may be remarkably improved.

Table 1 below shows the tabulated effects of the steaming apparatus according to an embodiment of the present disclosure compared with the related art.

**[Table 1]**

| Classification | Related art (before improvement of the spray device 300) | Embodiment (after improvement of the spray device 300) | Effects |
|---|---|---|---|
| Steam usage amount | 1,350 KG/HR | 1,134 KG/HR | 16% improved |
| Management points (pipe length / number of nozzles) | 133 m / 968 units | 25 m/ 344 units | Reduced number of places requiring cleaning, and improvement of contamination due to falling organic materials |
| Cleaning method | Cleaning after disassembling the transfer apparatus 10 (10 persons, 24 hr) | Instant cleaning (4 persons, 4 hr) | 97% improved |

As shown in the table above, it may be checked that the steaming apparatus according to an embodiment of the present disclosure, compared with the steaming apparatus according to the related art, has the effects, such as a reduced use amount of steam, a reduced management point according to the number of nozzles, unnecessity for disassembly during cleaning, reduced cleaning time and manpower, and prevention of contamination of the spray device 300 due to falling organic materials.

## Claims

1. A steaming apparatus comprising:
a main body frame (100);
a transfer apparatus (200) passing through the main body frame (100) and moving an object to be cooked in a predetermined direction;
a spray device (300) arranged in both lateral portions of the transfer apparatus (200),
wherein the spray device (300) comprises:
a pipe portion (310) extending in a direction parallel to a transport direction of the object to be cooked; and
a nozzle portion (320) connected to the pipe portion (310), and receiving and spraying stream to an outside,
wherein the nozzle portion (320) sprays steam in a direction toward an inside of the transfer apparatus (200) from an outside of the transfer apparatus,
wherein the nozzle portion (320) comprises a first nozzle portion (320A), a second nozzle portion (320B), and a third nozzle portion (320C),
the first nozzle portion (320A) sprays steam in a first direction,
the second nozzle portion (320B) sprays steam in a second direction,
the first direction (320A) and the horizontal plane have a first contained angle,
the second direction (320B) and the horizontal plane have a second contained angle,
**characterised in that** the transfer apparatus (200) comprises:
a plurality of transfer lines; and
the plurality of transfer lines are arranged in a multilayer with a predetermined interval in a vertical direction, and
wherein the pipe portion (310) is arranged between the plurality of transfer lines in the vertical direction,
wherein the third nozzle portion (320C) sprays steam in a third direction,
the third direction (320C) and the horizontal plane have a third contained angle, and
the first contained angle (320A), the second contained angle (320B), and the third contained angle (320C) have different sizes from one another.

2. The steaming apparatus of claim 1,
the first contained angle is downward from the horizontal plane,
the second contained angle is downward from the horizontal plane,
the third contained angle is downward from the horizontal plane, and
the first contained angle, the second contained angle, and the third contained angle have different sizes from one another.

3. The steaming apparatus of claim 1, wherein the size of the first contained angle is 0°, the size of the second contained angle is 22.5°, and the size of the third contained angle is 45°, and
the first nozzle portion (320A), the second nozzle portion (320B) and the third nozzle portion (320C) are sequentially arranged.

4. The steaming apparatus of claim 1, wherein, in the nozzle portion (320), a nozzle array (320L) in which the first nozzle portion (320A), the second nozzle portion (320B), and the third nozzle portion (320C) are sequentially arranged is repeatedly provided along the pipe portion (310).

## Patentansprüche

1. Dämpfeinrichtung, Folgendes umfassend:
einen Hauptkörperrahmen (100);
eine Transfereinrichtung (200), die sich durch den Hauptkörperrahmen (100) erstreckt und ein zu garendes Objekt in eine vorbestimmte Richtung bewegt;
eine Sprühvorrichtung (300), die in beiden seitlichen Abschnitten der Transfereinrichtung (200) angeordnet ist,
wobei die Sprühvorrichtung (300) Folgendes umfasst:
einen Rohrabschnitt (310), der sich in einer Richtung parallel zu einer Transportrichtung des zu garenden Objekts erstreckt; und
einen Düsenabschnitt (320), der mit dem Rohrabschnitt (310) verbunden ist und einen Strom aufnimmt und nach außen sprüht,
wobei der Düsenabschnitt (320) Dampf von einer Außenseite der Transfereinrichtung in eine Richtung zu einer Innenseite der Transfervorrichtung (200) hin sprüht,
wobei der Düsenabschnitt (320) einen ersten Düsenabschnitt (320A), einen zweiten Düsenabschnitt (320B) und einen dritten Düsenabschnitt (320C) umfasst,
der erste Düsenabschnitt (320A) Dampf in eine erste Richtung sprüht,
der zweite Düsenabschnitt (320B) Dampf in eine zweite Richtung sprüht,
die erste Richtung (320A) und die horizontale Ebene einen ersten eingeschlossenen Winkel aufweisen,
die zweite Richtung (320B) und die horizontale Ebene einen zweiten eingeschlossenen Winkel aufweisen,
**dadurch gekennzeichnet, dass** die Transfereinrichtung (200) Folgendes umfasst:
eine Vielzahl von Transferleitungen; und
die Vielzahl von Transferleitungen in einer Mehrfachschicht mit einem vorbestimmten Abstand in einer vertikalen Richtung angeordnet sind, und
wobei der Rohrabschnitt (310) zwischen der Vielzahl von Transferleitungen in der vertikaler Richtung angeordnet ist,
wobei der dritte Düsenabschnitt (320C) Dampf in eine dritte Richtung sprüht,
die dritte Richtung (320C) und die horizontale Ebene einen dritten eingeschlossenen Winkel aufweisen, und
der erste eingeschlossene Winkel (320A), der zweite eingeschlossene Winkel (320B) und der dritte eingeschlossene Winkel (320C) voneinander unterschiedliche Größen aufweisen.

2. Dämpfeinrichtung nach Anspruch 1, wobei
der erste eingeschlossene Winkel von der horizontalen Ebene nach unten gerichtet ist,
der zweite eingeschlossene Winkel von der horizontalen Ebene nach unten gerichtet ist,
der dritte eingeschlossene Winkel von der horizontalen Ebene nach unten gerichtet ist, und
der erste eingeschlossene Winkel, der zweite eingeschlossene Winkel und der dritte eingeschlossene Winkel voneinander unterschiedliche Größen aufweisen.

3. Dämpfeinrichtung nach Anspruch 1, wobei die Größe des ersten eingeschlossenen Winkels 0° beträgt, die Größe des zweiten eingeschlossenen Winkels 22,5° beträgt und die Größe des dritten eingeschlossenen Winkels 45° beträgt, und
der erste Düsenabschnitt (320A), der zweite Düsenabschnitt (320B) und der dritte Düsenabschnitt (320C) nacheinander angeordnet sind.

4. Dämpfeinrichtung nach Anspruch 1, wobei in dem Düsenabschnitt (320) eine Düsenanordnung (320L), in der der erste Düsenabschnitt (320A), der zweite Düsenabschnitt (320B) und der dritte Düsenabschnitt (320C) nacheinander angeordnet sind, wiederholt entlang des Rohrabschnitts (310) bereitgestellt ist.

## Revendications

1. Appareil de vaporisation comprenant :
un châssis de corps principal (100) ;
un appareil de transfert (200) traversant le châssis de corps principal (100) et déplaçant un objet à cuire dans une direction prédéterminée ;
un dispositif de pulvérisation (300) agencé dans les deux parties latérales de l'appareil de transfert (200),
dans lequel le dispositif de pulvérisation (300) comprend :
une partie de tuyau (310) s'étendant dans une direction parallèle à une direction de transport de l'objet à cuire ; et
une partie de buse (320) reliée à la partie de tuyau (310), et recevant et pulvérisant un flux vers l'extérieur,
dans lequel la partie de buse (320) pulvérise de la vapeur dans une direction vers un intérieur de l'appareil de transfert (200) depuis un extérieur de l'appareil de transfert,
dans lequel la partie de buse (320) comprend une première partie de buse (320A), une deuxième partie de buse (320B) et une troisième partie de buse (320C),
la première partie de buse (320A) pulvérise de la vapeur dans une première direction,
la deuxième partie de buse (320B) pulvérise de la vapeur dans une deuxième direction,
la première direction (320A) et le plan horizontal présentent un premier angle inclus,
la deuxième direction (320B) et le plan horizontal présentent un deuxième angle inclus,
**caractérisé en ce que** l'appareil de transfert (200) comprend :
une pluralité de lignes de transfert ; et
la pluralité de lignes de transfert sont agencées en multicouche avec un intervalle prédéterminé dans une direction verticale, et
dans lequel la partie de tuyau (310) est agencée entre la pluralité de lignes de transfert dans la direction verticale,
dans lequel la troisième partie de buse (320C) pulvérise de la vapeur dans une troisième direction,
la troisième direction (320C) et le plan horizontal présentent un troisième angle inclus, et
le premier angle inclus (320A), le deuxième angle inclus (320B) et le troisième angle inclus (320C) présentent des tailles différentes les uns des autres.

2. Appareil de vaporisation selon la revendication 1.
le premier angle inclus est orienté vers le bas par rapport au plan horizontal,
le deuxième angle inclus est dirigé vers le bas par rapport au plan horizontal,
le troisième angle inclus est dirigé vers le bas par rapport au plan horizontal, et
le premier angle inclus, le deuxième angle inclus et le troisième angle inclus présentent des tailles différentes les uns des autres.

3. Appareil de vaporisation selon la revendication 1, dans lequel la taille du premier angle inclus est de 0°, la taille du deuxième angle inclus est de 22,5°, et la taille du troisième angle inclus est de 45°, et
la première partie de buse (320A), la deuxième partie de buse (320B) et la troisième partie de buse (320C) sont agencées de manière séquentielle.

4. Appareil de vaporisation selon la revendication 1, dans lequel, dans la partie de buse (320), un réseau de buses (320L) dans lequel la première partie de buse (320A), la deuxième partie de buse (320B) et la troisième partie de buse (320C) sont agencées de manière séquentielle est prévu de manière répétée le long de la partie de tuyau (310).
